# EUROPÄISCHE PATENTSCHRIFT

(11) **EP 0 301 193 B1**
(45) Veröffentlichungstag und Bekanntmachung des Hinweises auf die Patenterteilung: **21.07.1993**
(21) Anmeldenummer: 88108242.4
(22) Anmeldetag: 24.05.1988
(51) Int. Cl.: B60J 7/185, E05C 19/14

(54) **Verschluss für ein Verdeck eines Fahrzeuges, insbesondere Personenwagens**
Locking device for vehicle tops, especially of convertible vehicles
Dispositif de verrouillage pour toit ouvrant, notamment de véhicules automobiles

(30) Priorität: 31.07.1987 DE 3725431
(43) Veröffentlichungstag der Anmeldung: 01.02.1989
(73) Patentinhaber: Dr.Ing.h.c. F. Porsche Aktiengesellschaft, 70435 Stuttgart (DE)
(72) Erfinder: Wurl, Willi, Dipl.-Ing. (FH), D-7532 Niefern-Öschelbronn (DE)

(56) Entgegenhaltungen:
- DE-C- 819 796
- GB-A- 491 723
- US-A- 2 961 262

## Beschreibung

Die Erfindung bezieht sich auf einen Verschluß für ein Verdeck eines Fahrzeuges, insbesondere Personenwagens, welches gegen einen feststehenden Aufbau gespannt wird, wobei der Verschluß einen verdeckseitig angeordneten Lagerbock mit einem um eine erste Querachse gelagerten Bedienungshebel sowie ein verschwenkbares Berschlußglied umfaßt, das mit einer aufbauseitigen Aufnahme zusammenwirkt.

Bei einem bekannten, nach dem Kniehebel-Prinzip wirkenden Verschluß der eingangs genannten Gattung (DE-B-1 925 227) ist an der Unterseite des Windschutzscheibenrahmens eine hakenförmige Aufnahme vorgesehen, in die ein bügelförmig ausgebildetes Verschlußglied eingehängt wird, wobei durch Verschwenken des Bedienungshebels das Verdeck gegen den Windschutzscheibenrahmen gespannt wird. Dieser Anordnung haftet der Nachteil an, daß das Schließen bzw. das Lösen des Verschlusses aufwendig ist und mehrere Handgriffe erfordert, da vor dem Betätigen des Bedienungshebels das Verschlußglied manuell mit der Aufnahme verbunden bzw. wieder von dieser getrennt werden muß.

Aufgabe der Erfindung ist es, an einem Verschluß für ein Verdeck solche Vorkehrungen zu treffen, daß bei guter Funktion die Bedienung des Verschlusses vereinfacht wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß der Bedienungskomfort des Verschlusses durch den Lenkhebel und die Zwangssteuerung des Verschlußgliedes wesentlich verbessert wird, da lediglich der Bedienungshebel verschwenkt werden muß, so daß eine Einhandbedienung des Verschlusses ermöglicht wird. Das Verschlußglied führt eine definierte Zwangsbewegung beim Verschwenken des Bedienungshebels durch, dergestalt, daß das Verschlußglied in einer ersten Phase selbsttätig zur Aufnahme hochbewegt wird und in diese eingreift, bevor in einem zweiten Schritt ein Spannen des Verschlußgliedes in Längsrichtung erfolgt. Durch die Verschlußlasche, die ab einem bestimmten Verschwenkwinkel des Bedienungshebels an der Unterseite des Windschutzscheibenrahmens zur Anlage gelangt, wird das Verdeck beim weiteren Verschwenken des Bedienungshebels selbsttätig nach unten in seine Schließstellung gezogen. Die definierte Bewegung des Verschlußgliedes wird durch die Form der lagerbockseitigen Führungsbahn und die längsverschiebbare Lagerung des Verschlußgliedes am Lagerbock gewährleistet. Die am Bedienungshebel gelagerte, federbelastete Sperrklinke sorgt für eine zusätzliche Arretierung des Bedienungshebels in seiner Schließstellung, was zur Erhöhung der Diebstahlsicherheit beiträgt. Der Verschluß besteht aus einfach herzustellenden Bauteilen und weist eine geringe Bauhöhe auf.

Ein Ausführungsbeispiel der Erfindung ist in der Zeichnung dargestellt und wird im folgenden näher erläutert.
Es zeigt
- Fig. 1: eine Teilseitenansicht eines Personenwagens mit einem Verdeck,
- Fig. 2: einen Querschnitt durch einen Windschutzscheibenrahmen und einen vorderen Randbereich des Verdecks mit einem Verschluß, teilweise im Schnitt und in größerem Maßstab, wobei der Windschutzscheibenrahmen etwa in eine horizontale Lage gedreht ist,
- Fig. 3: eine Teilseitenansicht der Fig. 2,

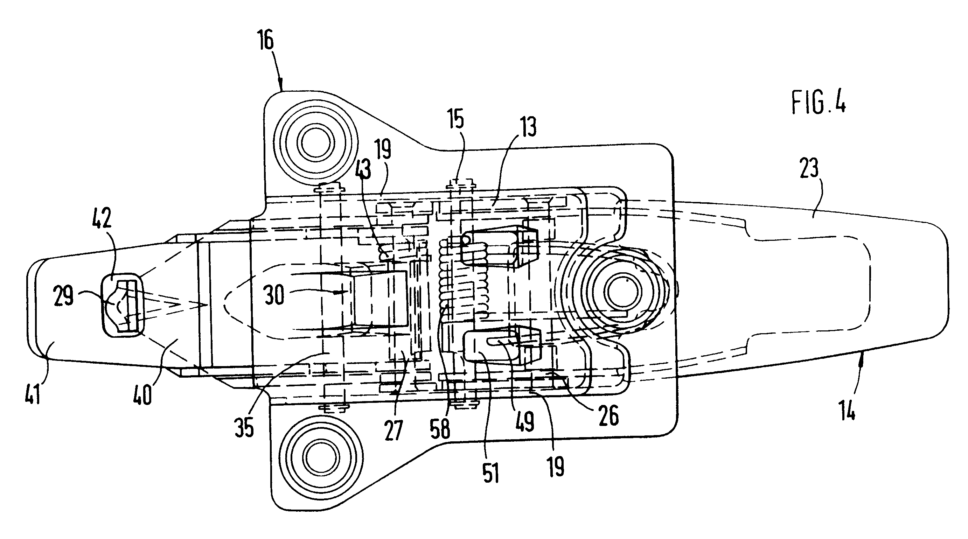

- Fig. 4: eine Draufsicht auf die Schließstellung des Verschlusses,
- Fig. 5: eine Seitenansicht auf eine Offenstellung des Verschlusses,
- Fig. 6: einen Schnitt nach der Linie VI-VI der Fig. 3,
- Fig. 7: einen Schnitt nach der Linie VII-VII der Fig. 3,
- Fig. 8: einen Schnitt nach der Linie VIII-VIII der Fig. 3,
- Fig. 9: einen Schnitt nach der Linie IX-IX der Fig. 3.

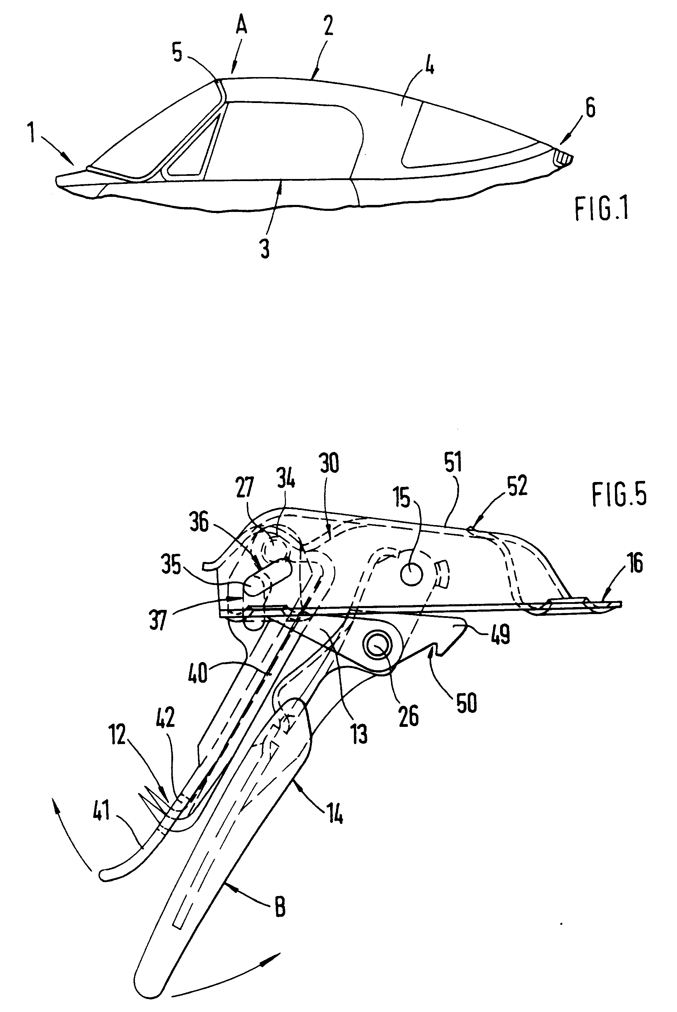

Der in Fig. 1 dargestellte Personenwagen 1 weist einen Aufbau 2 auf, der oberhalb einer Gürtellinie 3 durch ein Verdeck 4 gebildet wird, das sich zwischen einem Windschutzscheibenrahmen 5 und einem Heckbereich 6 erstreckt und lösbar am Windschutzscheibenrahmen 5 in lage gehalten ist.

Der Windschutzscheibenrahmen 5 wird durch ein hohlkörperartiges Strangpreßprofil 7 gebildet, das an der Innenseite einer Windschutzscheibe 8 angeordnet und über ein umlaufendes Klebeelement 9 mit der Windschutzscheibe 8 verbunden ist.

Zur lösbaren Befestigung des Verdecks 4 am Windschutzscheibenrahmen 5 ist beiderseits einer Mittellängsebene des Personenwagens 1 jeweils ein Verschluß 10 vorgesehen. Der nach dem Kniehebel-Prinzip wirkende Verschluß 10 umfaßt eine aufbauseitig angeordnete Aufnahme 11, in die bei Schließstellung A des Verdecks 4 ein verdeckseitig gelagertes Verschlußglied 12 eingreift und das Verdeck 4 gegen den Aufbau 2 spannt. Das Verschlußglied 12 ist über zumindest einen Lenkhebel 13 mit einem Bedienungshebel 14 verbunden, der über eine erste Querachse 15 drehbar an einem feststehenden Lagerbock 16 angelenkt ist.

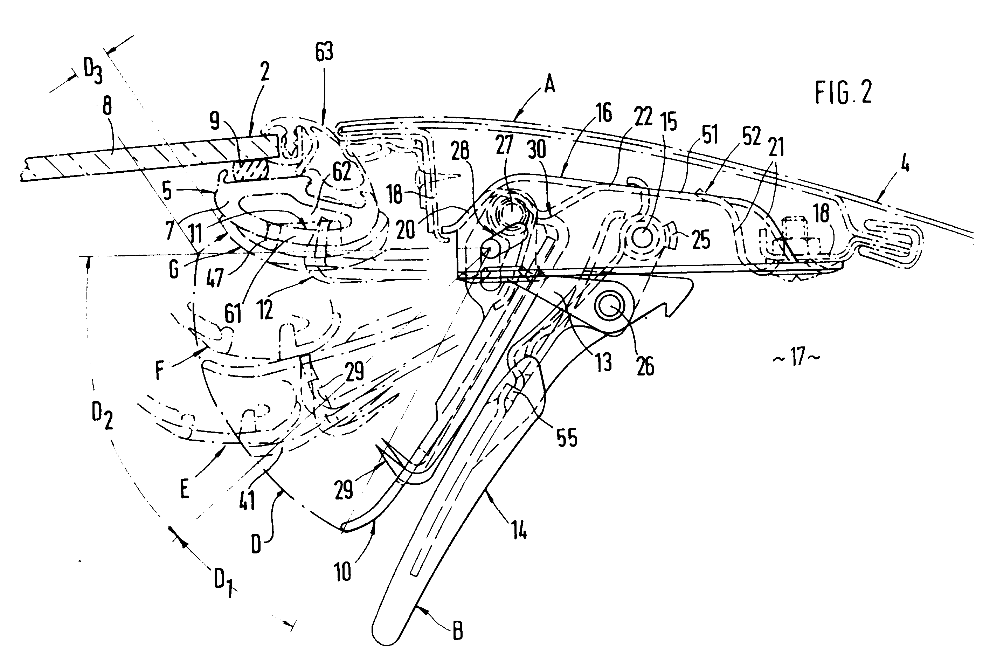

Der Lagerbock 16 ist - im Querschnitt gesehen - etwa U-förmig profiliert, wobei seine offene Seite einem Fahrgastraum 17 zugekehrt ist. Entsprechend Fig. 2 ist der Lagerbock 16 in eine nischenförmige Ausnehmung eines vorderen, querverlaufenden Rahmens 18 des Verdecks 4 eingesetzt und mittels nicht näher dargestellter Befestigungsschrauben am Rahmen 18 fixiert.

Die beiden Seitenwände 19 des Lagerbocks 16 sind vorne durch eine Querwand 20 und nach hinten hin durch einen schrägverlaufenden Wandabschnitt 21 miteinander verbunden. Ferner umfaßt der Lagerbock 16 eine obere Begrenzungswand 22.

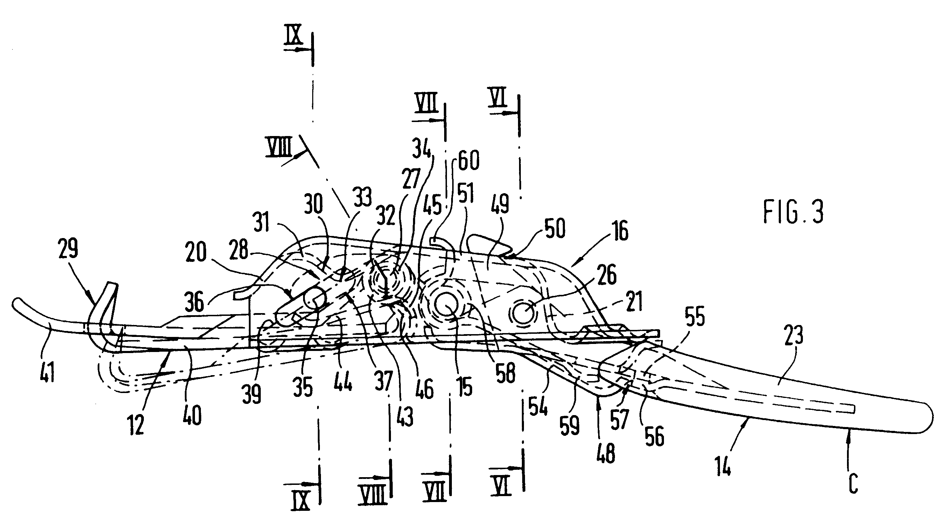

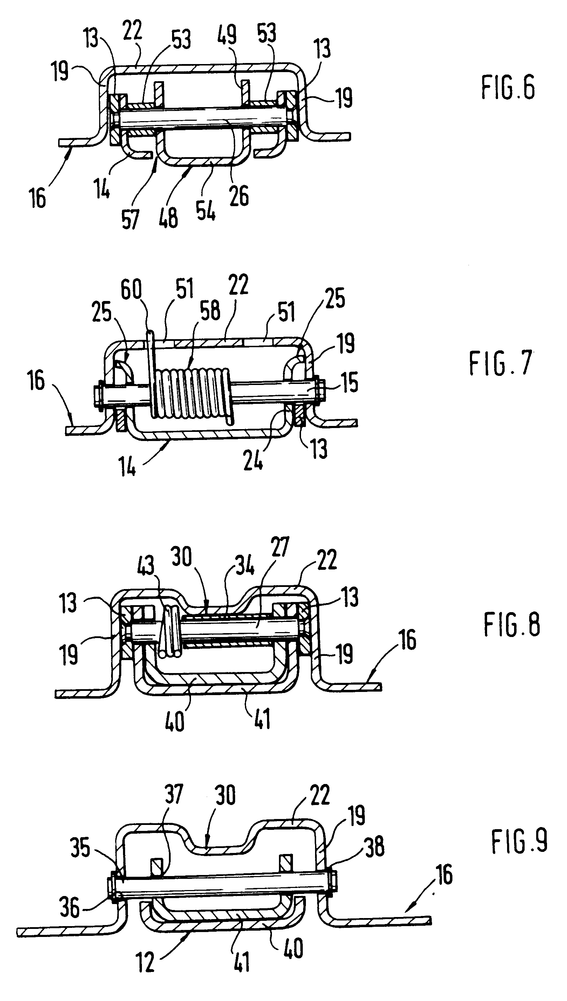

Der Bedienungshebel 14 erstreckt sich abschnittsweise innerhalb der Seitenwände 19 des Lagerbocks 16 und ist etwa U-förmig profiliert, wobei die offene Seite nach oben zum Verdeck 4 gerichtet ist. Außerhalb des Lagerbocks 16, und zwar im Griffbereich, ist der Bedienungshebel 14 allseitig mit einer Ummantelung 23 aus elastischem Werkstoff wie Gummi, Kunststoff oder dergleichen versehen (Fig. 3). Im Bereich seiner Anlenkung am Lagerbock 16 weist der Bedienungshebel 14 an den freien Enden seiner beiden außenliegenden Schenkel 24 jeweils eine nach außen gerichtete Abstellung 25 auf, die an die benachbarte Seitenwand 19 des Lagerbocks 16 herangeführt ist. Durch die beiden Abstellungen 25 wird der Bedienungshebel 14 in Querrichtung fixiert (Fig. 7).

Die erste feststehende Querachse 15 verbindet die beiden Seitenwände 19 des Lagerbocks 16 (Fig. 7). An beiden Längsseiten des Bedienungshebels 14 ist jeweils ein Lenkhebel 13 vorgesehen, der über eine zweite Querachse 26 mit dem Bedienungshebel 14 und über eine dritte Querachse 27 mit dem Verschlußglied 12 verbunden ist. Die zweite Querachse und die dritte Querachse 27 verändern beim Verschwenken des Bedienungshebels 14 ihre Lage.

In angehobener Schließstellung C des Bedienungshebels 14 ist die erste Querachse 15 - in Längsrichtung gesehen - etwa in der Mitte zwischen der zweiten Querachse 26 und der dritten Querachse 27 angeordnet, wobei die zweite Querachse 26 benachbart dem Wandabschnitt 21 des Lagerbocks 16 verläuft (Fig. 3).

Die beiden Lenkhebel 13 erstrecken sich außerhalb des Bedienungshebels 14 bzw. des Verschlußgliedes 12 und innerhalb des Lagerbocks 16.

Das Verschlußglied 12 wirkt über eine Zwangssteuerung 28 dergestalt mit dem Lagerbock 16 bzw. dem Bedienungshebel 14 zusammen, daß beim Verschwenken des Bedienungshebels 14 nach oben eine definierte Aufwärtsbewegung des Verschlußgliedes 12 zur Aufnahme 11 hin sowie eine nachfolgende Spannbewegung des Verschlußgliedes 12 in Längsrichtung - und zwar entgegen der Fahrtrichtung - erfolgt. Der nach oben abgestellte hakenförmige Endbereich 29 des Verschlußgliedes 12 bewegt sich beim Verschwenken des Bedienungshebels 14 parallel zu einer Bahn D, wobei die Bahn D die Bewegung des freien Endes des Verschlußgliedes 12 zeigt und in Fig. 2 strichpunktiert dargestellt ist. Die Bahn D setzt sich aus einem ersten radienförmigen Abschnitt D1, einem nachfolgenden kurvenförmigen Abschnitt D2 und einem geradlinigen, schrägverlaufenden Endbereich D3 zusammen, wobei der Endbereich D3 etwa parallel zu einer Mittelachse 39 einer lagerbockseitigen Führungsbahn 36 verläuft.

Die Zwangssteuerung 28 für das Verschlußglied 12 umfaßt eine lagerbockseitig angeordnete Führungsbahn 30, die sich in einem mittleren, vorneliegenden Bereich der oberen Begrenzungswand 22 des Lagerbocks 16 erstreckt. Die Führungsbahn 30 ist einstückig mit dem Lagerbock 16 ausgebildet und setzt sich aus zwei Abschnitten 31, 32 zusammen, die über einen Nocken 33 miteinander verbunden sind (Fig. 3).

Der erste, über eine Rundung an die Querwand 20 angeschlossene Abschnitt 31 verläuft radienförmig zum tieferliegenden Nocken 33, wogegen der zweite Abschnitt 32 vom Nocken 33 weg schräg nach oben geradlinig zur Begrenzungswand 22 führt. Mit der Führungsbahn 30 wirkt eine aus Stahl oder Kunststoff gefertigte Rolle 34 zusammen. Die Rolle 34 ist unterhalb der Führungsbahn 30 auf der Querachse 27 angeordnet und in Querrichtung fixiert.

In der Schließstellung C des Bedienungshebels 14 befindet sich die Rolle 34 in einem mittleren Bereich der Längserstreckung des zweiten Abschnitts 32 der Führungsbahn 30 (Fig. 3). Beim Verschwenken des Bedienungshebels 14 nach unten in seine Offenstellung B wandert die Rolle 34 entlang des zweiten Abschnittes 32 nach unten zum Nocken 33, passiert diesen und bewegt sich dann entlang des ersten Abschnitts 31 nach oben in ihre vordere Endlage (Fig. 5). Der zweite Abschnitt 32 verläuft parallel zur Mittelachse 39 und ist im oberen Bereich über einen gerundeten Übergangsbereich an die Begrenzungswand 22 angeschlossen.

Ferner beinhaltet die Zwangssteuerung 28 einen in Querrichtung verlaufenden Bolzen 35, der das Verschlußglied 12 mit den Seitenwänden 19 des Lagerbocks 16 verbindet, wobei dieser durch schrägverlaufende Längsschlitze 36, 37 des Lagerbocks 16 und des Verschlußgliedes 12 hindurchgeführt ist und sich beim Betätigen des Bedienungshebels 14 innerhalb der Längsschlitze 36, 37 verschiebt.

Der Bolzen 35 ist außerhalb des Lagerbocks 16 durch Scheiben 38 gegen axiales Verschieben gesichert. Die Längsschlitze 36, 37 am Lagerbock 16 und am Verschlußglied 12 sind in Schließstellung C des Bedienungshebels 14 zu einer gemeinsamen Mittelachse 39 ausgerichtet, jedoch in Längsrichtung gesehen, versetzt zueinander angeordnet, wobei sich die Längsschlitze 36, 37 bereichsweise überdecken.

In der abgesenkten Offenstellung B des Bedienungshebels 14 erstreckt sich der Bolzen 35 am - in Fahrtrichtung gesehen - vorneliegenden Ende der lagerbockseitigen Längsschlitze 36 und am oberen Ende der verschlußgliedseitigen Längsschlitze 37 (Fig. 5), wogegen in der angehobenen Schließstellung C des Bedienungshebels 14 der Bolzen 35 am hinteren Ende der lagerbockseitigen Längsschlitze 36 und am unterliegenden Ende der verschlußgliedseitigen Längsschlitze 37 verläuft.

Das Verschlußglied 12 setzt sich aus einem federbelasteten Verschlußhaken 40 und einer Verschlußlasche 41 zusammen, wobei der Verschlußhaken 40 und die Verschlußlasche 41 gemeinsam auf der dritten Querachse 27 drehbar angelenkt sind. Der an der Unterseite der Verschlußlasche 41 anliegende Verschlußhaken 40 umgreift die Verschlußlasche 41 im Bereich der gemeinsamen Anlenkung in Querrichtung.

Der nach oben abgestellte, hakenförmige Endbereich 29 des Verschlußhakens 40, der mit der Aufnahme 11 bei verriegeltem Verdeck 4 formschlüssig zusammenwirkt, ist durch eine rechteckförmige Öffnung 42 der Verschlußlasche 41 hindurchgeführt und überragt diese nach oben hin.

Das Federelement für den Verschlußhaken 40 wird durch eine Schenkelfeder 43 gebildet, deren zylindrischer Abschnitt sich auf der dritten Querachse 27 neben der Rolle 34 befindet, wogegen die beiden abgewinkelten Enden 44, 45 einerseits mit der Innenseite der Verschlußlasche 41 und andererseits mit einer endseitigen, nach oben gerichteten Abstützung 46 des Verschlußhakens 40 zusammenwirken (Fig. 3). Durch das Federelement 43 wird der Verschlußhaken 40 stets nach oben hin gegen die Verschlußlasche 41 bewegt.

Die Verschlußlasche 41 überragt den Verschlußhaken 40 nach vorne hin und ist in diesem Bereich der Außenform einer in die Aufnahme 11 eingesetzten Rosette 47 angepaßt. Die Rosette 47 verhindert ein Verkratzen des Windschutzscheibenrahmens 5 durch das Verschlußglied 12.

Durch die Verschlußlasche 41 wird das Verdeck 4 beim Betätigen des Bedienungshebels 14 selbsttätig nach unter in seine Schließstellung A gezogen. Zur zusätzlichen Arretierung des Bedienungshebels 14 in der Schließstellung des Verschlusses 10 ist eine lösbare Sperrklinke 48 vorgesehen, die um die zweite Querachse 26 drehbar gelagert ist und verrastend mit dem Lagerbock 16 zusammenwirkt. Die U-förmig profilierte Sperrklinke 48 weist zwei seitliche, aufrecht verlaufende Arme 49 auf, die am oberen Ende mit Rastnasen 50 versehen sind. Die beiden Arme 49 ragen durch korrespondierende Öffnungen 51 der oberen Begrenzungswand 22 des Lagerbocks 16 hindurch, wobei die Rastnasen 50 nach oben abgestellte, zungenförmige Wandabschnitte 52 der oberen Begrenzungswand 22 hintergreifen. Die Sperrklinke 48 ist durch zwei auf der Querachse 26 sitzende Hülsen 53 in Querrichtung fixiert, wobei sich jede Hülse 53 zwischen der Außenseite der Sperrklinke 48 und der Innenseite des Bedienungshebels 14 erstreckt.

Die in der Seitenansicht gesehen, etwa winkelförmig ausgebildeten Arme 49 der Sperrklinke 48 sind im unteren Bereich durch einen querverlaufenden Wandabschnitt 54 miteinander verbunden, wobei sich ein hintenliegender, nach oben abgestellter Flansch 55 des Wandabschnitts 54 an der Innenseite 56 des Bedienungshebels 14 abstützt. Zur Aufnahme der Sperrklinke 48 ist am Bedienungshebels 14 eine Ausnehmung 57 angeordnet (Fig. 6). Die Sperrklinke 48 wirkt mit einer Schenkelfeder 58 zusammen, die auf der ersten Querachse 15 sitzt. Ein abgestelltes Ende 59 der Schenkelfeder 58 liegt an der Innenseite des Wandabschnittes 54 der Sperrklinke 48 an, wogegen sich das andere Ende 60 am Rand der Öffnung 51 der oberen Begrenzungswand 22 abstützt. Die Schenkelfeder 58 bewirkt einerseits eine federnde Lagerung der Sperrklinke 48; andererseits wird der Verschluß in seiner geöffneten Stellung B gehalten.

Die Aufnahme 11 ist einstückig mit dem Windschutzscheibenrahmen 5 ausgebildet und wird durch eine schlitzförmige Öffnung 61 bzw. einen Hohlraum 62 des Windschutzscheibenrahmens 5 gebildet. In die an der Unterseite des Windschutzscheibenrahmens 5 vorgesehene Öffnung 61 ist die Rosette 47 eingeklipst.

Das Öffnen und Schließen des Verdecks 4 erfolgt dergestalt: Beim Schließen des Verdecks 4 ist dieses von einer zurückgeklappten Ruhestellung soweit nach vorne verschwenkt, bis sich der vordere Rahmen 18 etwa 20 mm oberhalb des Windschutzscheibenrahmens 5 befindet. Der Verschluß 10 des Verdecks 4 nimmt dabei eine abgesenkte Offenstellung B ein, in der das Verschlußglied 12 und der Bedienungshebel 14 etwa parallel zueinander verlaufen und schräg nach vorne geneigt sind (Fig. 5). Durch das anschließende Hochschwenken des Bedienungshebels 14 führt das Verschlußglied 12 eine Aufwärtsbewegung entlang der Führungsbahn D durch, so daß die Verschlußlasche 41 zur Anlage mit dem Windschutzscheibenrahmen 5 gelangt (siehe Zwischenstellung E). Dies erfolgt etwa nach halbem Schwenkweg des Bedienungshebels 14. Durch eine weitere Verschwenkbewegung des Bedienungshebels 14 nach oben wird das Verdeck 4 selbsttätig nach unten gezogen, bis es unter Vorspannung auf einem aufbauseitigen Dichtkörper 63 anliegt. Der Verschlußhaken 40 bewegt sich beim Betätigen des Bedienungshebels 14 parallel zur Kurvenbahn D, so daß daß der Verschlußhaken 40 zuerst zur Aufnahme 11 hochbewegt wird und ann innerhalb der Aufnahme 11 eine Spannbewegung entgegen der Fahrtrichtung ausübt.

In der Zwischenstellung E liegt die Verschlußlasche 41 an der Unterseite des Windschutzscheibenrahmens 5 an und der hakenförmige Endbereich 29 des Verschlußhakens 40 liegt in Fahrtrichtung gesehen, hinter dem Windschutzscheibenrahmen 5.

In der Zwischenstellung F ist die Verschlußlasche 41 bereits weiter nach vorne gewandert und der hakenförmige Endbereich 29 des federbelasteten Verschlußhakens 40 wird durch den Windschutzscheibenrahmen 5 um einen geringen Betrag nach unten verschwenkt und zwar solange, bis der Endbereich 29 in die Öffnung 61 des Windschutzscheibenrahmens 5 eingreift. Dann wird der Verschlußhaken 40 durch die Schenkelfeder 43 nach oben verschwenkt, bis er an der Unterseite der Verschlußlasche 41 anliegt. Wenn der Bedienungshebel 14 seine obenliegende Schließstellung C einnimmt, erfolgt zugleich eine automatische Verriegelung zwischen der Sperrklinke 48 und dem Lagerbock 16.

Beim Öffnen des Verschlusses 10 wird zuerst die Sperrklinke 48 manuell entriegelt und sodann kann der Bedienungshebel 14 nach unten verschwenkt werden, wodurch das Verschlußglied 12 aus der Aufnahme 11 heraus bewegt wird und sich das Verdeck 4 nach hinten klappen läßt.

## Patentansprüche

1. Verschluß (10) für ein Verdeck (4) eines Fahrzeugs (1), welches gegen einen feststehenden Aufbau (2) gespannt wird, wobei der Verschluß (10) einen verdeckseitig angeordneten Lagerbock (16) mit einem um eine erste Querachse (15) gelagerten Bedienungshebel (14), sowie ein verschwenkbares Verschlußglied (12) umfaßt, das mit einer aufbauseitigen Aufnahme (11) zusammenwirkt, **dadurch gekennzeichnet,** daß der Bedienungshebel (14) über wenigstens einen Lenkhebel (13) drehbar mit dem Verschlußglied (12) verbunden ist, wobei das Verschlußglied (12) einerseits mit einer am Lagerbock (16) vorgesehenen Führungsbahn (30) und andererseits mit einem querverlaufenden Bolzen (35) zusammenwirkt, der durch Längsschlitze (36, 37) hindurchgeführt ist und daß auf einer den Lenkhebel (13) mit dem Bedienungshebel (14) verbindenden zweiten Querachse (26) eine federbelastete Sperrklinke (48) drehbar gelagert ist, wobei eine Rastnase (50) der Sperrklinke (48) einen Wandabschnitt (52) einer oberen Begrenzungswand (22) des Lagerbocks (16) hintergreift und somit den Bedienungshebel (14) in seine Schließstellung arretiert.

2. Verschluß nach Anspruch 1, **dadurch gekennzeichnet,** daß an beiden Längsseiten des Bedienungshebels (14) jeweils ein Lenkhebel (13) vorgesehen ist, der über die zweite Querachse (26) drehbar mit dem Bedienungshebel (14) und über eine dritte Querachse (27) mit dem Verschlußglied (12) verbunden ist.

3. Verschluß nach Anspruch 1, **dadurch gekennzeichnet,** daß eine Zwangssteuerung (28) für das Verschlußglied (12) eine am Lagerbock (16) vorgesehene Führungsbahn (30) umfaßt, die mit einer auf der dritten Querachse (27) sitzenden Rolle (34) zusammenwirkt und daß die Zwangssteuerung (28) ferner einen in Querrichtung verlaufenden Bolzen (35) beinhaltet, der das Verschlußglied (12) und den Lagerbock (16) miteinander verbindet, wobei der Bolzen (35) durch Längsschlitze (36, 37) des Lagerbocks (16) und des Verschlußgliedes (12) hindurchgeführt ist und sich beim Betätigen des Bedienungshebels (14) innerhalb der Längsschlitze (36, 37) verschiebt.

4. Verschluß nach Anspruch 3, **dadurch gekennzeichnet,** daß die Längsschlitze (36, 37) am Lagerbock (16) und am Verschlußglied (12) in geschlossener Position des Verschlusses (10)zu einer gemeinsamen Mittelachse (39) ausgerichtet sind, jedoch in Längsrichtung versetzt zueinander verlaufen.

5. Verschluß nach Anspruch 1, **dadurch gekennzeichnet,** daß sich das Verschlußglied (12) aus einem federbelasteten Verschlußhaken (40) und einer Verschlußlasche (41) zusammensetzt, wobei der Verschlußhaken (40) und die Verschlußlasche (41) gemeinsam auf der dritten Querachse (27) drehbar angelenkt sind.

6. Verschluß nach Anspruch 5, **dadurch gekennzeichnet,** daß der Verschlußhaken (40) an der Unterseite der Verschlußlasche (41) anliegt, wobei der nach oben abgestellte Endbereich (29) des Verschlußhakens (40) durch eine Öffnung (42) der Verschlußlasche (41) hindurchragt.

7. Verschluß nach den Ansprüchen 5 und 6, **dadurch gekennzeichnet,** daß die Verschlußlasche (41) den Verschlußhaken (40) nach vorne hin überragt.

8. Verschluß nach Anspruch 1, **dadurch gekennzeichnet,** daß sich in Schließstellung des Verschlusses (10) die Sperrklinke (48) in einem untenliegenden Bereich mit einem endseitigen Flansch (55) an der Innenseite (56) des Bedienungshebels (14) abstützt.

9. Verschluß nach Anspruch 5, **dadurch gekennzeichnet,** daß die Verschlußlasche (41) beim Verschwenken des Bedienungshebels (14) mit der Unterseite des Windschutzscheibenrahmens (5) zusammenwirkt.

10. Verschluß nach Anspruch 9, **dadurch gekennzeichnet,** daß eine Aufnahme (11) einstückig mit dem Windschutzscheibenrahmen (5) ausgebildet und durch eine schlitzförmige Öffnung (61) bzw. einen innenliegenden Hohlraum (62) des Windschutzscheibenrahmens (5) dargestellt ist, wobei in die Öffnung (61) eine Rosette (47) eingesetzt ist.

11. Verschluß nach Anspruch 5, **dadurch gekennzeichnet,** daß sich der Endbereich (29) des Verschlußhakens (40) parallel zu einer Bahn (D) des Verschlußgliedes (12) bewegt, wobei sich die Bahn (D) aus einem ersten radienförmigen Abschnitt (D1), einem daran anschließenden, kurvenförmigen Abschnitt (D2) und einem endseitigen Bereich (D3) zusammensetzt und letzterer parallel zur Mittelachse (39) verläuft.

## Claims

1. A lock (10) for a top (4) of a vehicle (1), the top (4) being stretched against a fixed body (2), the lock (10) comprising a bearing block (16) mounted on the top, with a control lever (14) mounted about a first transverse axis (15), and a swivellable locking member (12) which cooperates with a receiver (11) on the body, **characterised in that** the control lever (14) is connected rotatably to the locking member (12) via at least one guide lever (13), the locking member (12) co-operating firstly with a guideway (30) provided on the bearing block (16) and secondly with a transverse bolt (35) guided through longitudinal slits (36, 37), and in that a spring-loaded pawl (48) is mounted rotatably on a second transverse axis (26) connecting the guide lever (13) to the control lever (14), a stop lug (50) of the pawl (48) engaging behind a wall portion (52) of an upper boundary wall (22) of the bearing block (16) and thus arresting the control lever (14) in its closed position.

2. A lock according to Claim 1, **characterised in that** a guide lever (13) is provided on each of the longitudinal sides of the control lever (14), which guide lever (13) is connected rotatably to the control lever (14) via the second transverse axis (26) and is connected to the locking member (12) via a third transverse axis (27).

3. A lock according to Claim 1, **characterised in that** a forced control mechanism (28) for the locking member (12) comprises a guideway (30) provided on the bearing block (16) and co-operating with a roller (34) located on the third transverse axis (27), and in that the forced control mechanism (28) further comprises a bolt (35) extending in the transverse direction and interconnecting the locking member (12) and the bearing block (16), the bolt (35) being guided through longitudinal slits (36, 37) in the bearing block (16) and in the locking member (12) and being displaced within the longitudinal slits (36, 37) when the control lever (14) is operated.

4. A lock according to Claim 3, **characterised in that** the Iongitudinal slits (36, 37) in the bearing block (16) and in the locking member (12) are aligned relative to a common central axis (39) when the lock (10) is in the closed position, but extend offset to one another in the longitudinal direction.

5. A lock according to Claim 1, **characterised in that** the locking member (12) comprises a spring-loaded locking hook (40) and a locking plate (41), the locking hook (40) and the locking plate (41) both being hinged rotatably on the third transverse axis (27).

6. A lock according to Claim 5, **characterized in that** the locking hook (40) rests against the lower side of the locking plate (41), wherein the end region (29) of the locking hook (40), which is turned upwards, extends through an opening (42) in the locking plate (41).

7. A lock according to Claims 5 and 6, **characterised in that** the locking plate (41) extends over the locking hook (40) at the front.

8. A lock according to Claim 1, **characterised in that,** when the lock (10) is in the closed position, the pawl (48) is supported in a lower region against the inside (56) of the control lever (14) by means of an end flange (55).

9. A lock according to Claim 5, **characterised in that** the locking plate (41) co-operates with the lower side of the windscreen frame (5) when the control lever (14) is swivelled.

10. A lock according to Claim 9, **characterised in that** a receiver (11) is formed in one piece with the windscreen frame (5) and is constructed as a slit-shaped opening (61) and an enclosed cavity (62) in the windscreen frame (5), a flange (47) being inserted into the opening (61).

11. A lock according to Claim 5, **characterised in that** the end region (29) of the locking hook (40) moves parallel to a track (D) of the locking member (12), the track (D) comprising a first radial portion (D1), an adjoining curved portion (D2) and an end region (D3), the latter extending parallel to the central axis (39).

## Revendications

1. Dispositif de verrouillage d'une capote (4) d'un véhicule automobile (1), laquelle est fixée contre une carrosserie (2) fixe, le dispositif de verrouillage (10) comportant un support de palier (16), monté côté capote avec un levier de manoeuvre (14), monté autour d'un premier axe transversal (15), ainsi qu'un organe de verrouillage (12) pivotant qui coopère avec un logement (11) côté carrosserie, caractérisé en ce que le levier de manoeuvre (14) est relié, par au moins un levier de commande (13), de manière à pouvoir tourner avec l'organe de verrouillage (12), l'organe de verrouillage (12) coopérant d'une part avec une voie de guidage (30) prévue sur le support de palier (16) et d'autre part avec une tige (35) s'étendant transversalement, qui traverse des fentes longitudinales (36, 37) et en ce que sur un deuxième axe transversal (26), reliant le levier de commande (13) au levier de manoeuvre (14), un cliquet d'arrêt (48) soumis à l'action d'un ressort est monté tournant, un ergot d'encliquetage (50) du cliquet d'arrêt (48) passant derrière une partie de paroi (52) d'une paroi de délimitation (22) supérieure du support d'appui (16) et bloquant ainsi le levier de manoeuvre (14) dans sa position de fermeture.

2. Dispositif de verrouillage selon la revendication 1, caractérisé en ce que sur chacun des deux grands côtés du levier de manoeuvre (14) il est prévu un levier de commande (13) qui est relié par le deuxième axe transversal (26) de manière à pouvoir tourner avec le levier de manoeuvre (14) et, par un troisième axe transversal (27), avec l'organe de verrouillage (12).

3. Dispositif de verrouillage selon la revendication 1, caractérisé en ce qu'une commande forcée (28) pour l'organe de verrouillage (12) comprend une voie de guidage (30), prévue sur le support d'appui (16), laquelle coopère avec un galet (34) monté sur le troisième axe transversal (27) et en ce que la commande forcée (28) comporte en outre une tige (35) s'étendant dans la direction transversale qui relie entre eux l'organe de verrouillage (12) et le support d'appui (16), la tige (35) traversant des fentes longitudinales (36, 37) du support (16) et l'organe de verrouillage (12) et se déplaçant à l'intérieur des fentes longitudinales (36, 37), lors de l'actionnement du levier de manoeuvre (14).

4. Dispositif de verrouillage selon la revendication 3, caractérisé en ce que les fentes longitudinales (36, 37) du support (16) et de l'organe de verrouillage (12) sont orientées, en position fermée du dispositif de verrouillage (10), vers un axe médian (39) commun, mais sont décalées l'une par rapport à l'autre dans la direction longitudinale.

5. Dispositif de verrouillage selon la revendication 1, caractérisé en ce que l'organe de verrouillage (12) est constitué d'un crochet (40) soumis à l'action d'un ressort et d'une attache (41), le crochet (40) et l'attache (41) s'articulant conjointement, de manière à pouvoir tourner, sur le troisième axe transversal (27).

6. Dispositif de verrouillage selon la revendication 5, caractérisé en ce que le crochet (40) s'applique contre la face inférieure de l'attache (41), la zone terminale (29) dirigée vers le haut du crochet (40) traversant une ouverture (42) de l'attache (41).

7. Dispositif de verrouillage selon les revendications 5 et 6, caractérisé en ce que l'attache (41) dépasse vers l'avant du crochet (40).

8. Dispositif de verrouillage selon la revendication 1, caractérisé en ce qu'en position fermée du dispositif de verrouillage (10), le cliquet d'arrêt (48) prend appui, dans une zone inférieure, avec une bride (55) terminale, contre le côté intérieur (56) du levier de manoeuvre (14).

9. Dispositif de verrouillage selon la revendication 5, caractérisé en ce que l'attache (41) coopère, lors du pivotement du levier de manoeuvre (14), avec la face inférieure du cadre de pare-brise (5).

10. Dispositif de verrouillage selon la revendication 9, caractérisé en ce qu'un logement (11) réalisé d'une seule pièce avec le cadre (5) du pare-brise est constitué par une ouverture (61) en forme de fente ou une cavité (62) intérieure du cadre (5) du pare-brise, une rosette (47) étant insérée dans l'ouverture (61).

11. Dispositif de verrouillage selon la revendication 5, caractérisé en ce que la zone terminale (29) du crochet (40) se déplace parallèlement à une voie (D) de l'organe de verrouillage (12), la voie (D) étant constituée d'une première partie (D1) en forme de rayon, d'une partie (D2) incurvée, se rattachant à la première et d'une zone terminale (D3) et cette dernière étant parallèle à l'axe médian (39).
